# EUROPEAN PATENT SPECIFICATION

(11) **EP 1 613 109 B1**
(45) Date of publication and mention of the grant of the patent: **04.03.2009**
(21) Application number: 04725665.6
(22) Date of filing: 05.04.2004
(51) Int. Cl.: G06F 9/46

(54) **A METHOD OF LIMITING QUANTITY OF FLOW OF LOCATION INFORMATION REQUEST IN LOCATION SERVICE**
VERFAHREN ZUR BEGRENZUNG DER STRÖMUNGSMENGE VON ORTSINFORMATIONSANFORDERUNGEN IN EINEM ORTSBESTIMMUNGSDIENST
PROCEDE POUR LIMITER LA QUANTITE DE FLUX DE DEMANDES D'INFORMATIONS DE POSITION

(30) Priority: 07.04.2003 CN 03109249
(43) Date of publication of application: 04.01.2006
(73) Proprietor: Huawei Technologies Co., Ltd., Longgang District, Shenzhen, Guangdong Province 518129 (CN)
(72) Inventor: DUAN, Xiaoqin, Shenzhen, Guangdong 518129 (CN)
(74) Representative: Körber, Martin Hans
(86) International application number: PCT/CN2004/000313
(87) International publication number: WO 2004/091235

(56) References cited:
- WO-A1-02/48733
- CN-A- 1 335 035
- CN-A- 1 373 426
- CN-A- 1 394 454
- US-A1- 2003 027 571
- "Universal Mobile Telecommunications System (UMTS); Functional stage 2 description of location services (LCS) in UMTS (3GPP TS 23.171 version 3.9.0 Release 1999); ETSI TS 123 171" ETSI STANDARDS, EUROPEAN TELECOMMUNICATIONS STANDARDS INSTITUTE, SOPHIA-ANTIPO, FR, vol. 3-SA2, no. V390, September 2002 (2002-09), XP014007831 ISSN: 0000-0001

## Description

### Field of the Technology

The present invention relates to flow control technique, more particularly to a method and a system for restricting Location request flows in location service.

### Background of the Invention

For Location Service (LCS) of mobile communication network, location information of target User Equipment ( UE ) is obtained through positioning technique, wherein UE demotes UE terminal to be positioned in mobile communication network, and position information can be expressed by either geographical latitude and longitude information or local location information, e.g. name of local streets. Location information obtained by LCS Server can be provided to target UE for self positioning; or provided to other client such as organizations and individuals, which requesting for location of target UE, as a Value-added service. Therefore, location service is a broad applied service in terms of emergency succor, vehicle guidance, intelligence traffic system, work dispatching, team management, mobile yellow page inquiry and network performance enhancement, etc. LCS specifications as well as function mode, structure, state description and message flow of the whole LCS system are illustrated in The 3rd Generation Partnership Project (3GPP) (see e.g. ETSI TS 123 171 v3.9.0 (3GPP TS 23.171 version 3.9.0 Release 1999) or xP14007831).

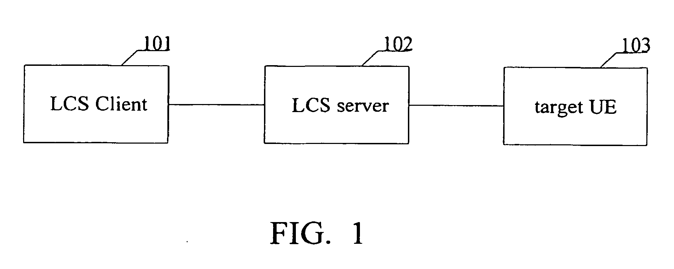

Figure 1 is a schematic diagram illustrating logical structure of LCS network, as shown in figure 1, LCS Client 101 requests location information of UE 103 from the LCS server 102, LCS server 102 performs validity authentication to LCS Client 101, so as to check if target UE 103 allows LCS Client 101 to request location information thereof, if LCS Client 101 passes the validity authentication of LCS server 102, LCS server 102 will position the target UE and provide location information of target UE 103 to LCS Client 101; otherwise, LCS server 102 will reject the request of LCS Client 101 to obtain location information of target UE 103.

At present, in LCS specification of 3GPP, when LCS Client is initiating a Location request to LCS server, the Location request could be able to carry multiple target UE identifiers, which indicates LCS Client demands LCS server to perform batch positioning to multiple target UE and then provide location information of multiple target UE to LCS Client, so that the number of Location request transmitted by LCS Client can be reduced, thus signaling load between LCS Client and LCS server can be reduced and execution efficiency of Location request can be increased. However, there is neither flow restricting method of the received Location request is provided in the current LCS specification of 3GPP, nor processing mechanism of adjusting subsequent Location requests according to LCS Server's processing capacity in case of congestion, therefore, when LCS Client demands LCS server to provide location information of multiple target UE, or when multiple LCS Clients send Location requests to LCS server, LCS server will confront collision of large amount of Location requests, and LCS server may be led to paralysis due to insufficient processing capacity because of lack of flow control mechanism.

US 2003/0027571 A1 discloses a system and a method for managing congestion in a Home Location Register (HLR) serving registration requests (messages) received from Mobile Switching Centers (MSCs). The managing of congestion is based on determining a processor load of the HLR, a threshold for each MSC, comparing for each MSC the corresponding threshold with the processor load, a reduction algorithm for each MSC, determining a reduction amount for each MSC of which the corresponding threshold is exceeded by the processor load and reducing the number of registration messages sent from the MSC at least by the reduction amount. The reduction amount of a given MSC may be based on the number of messages sent by the MSC and may be based on the total number of messages sent by all MSCs and received by the HLR.

### Summary of the Invention

Therefore, the main object of the present invention is to provide a method for restricting Location request flows in location service, so that LCS Server can control number of Location request which is to be processed and protect security of self processing performance.

In order to obtain the above object, a method for restricting Location request flows in location service comprises the following steps:
Receiving at a Location Service server a location request sent by a Location Service client, said location request comprising location request tasks for more than one target user equipment, verifying whether a first task number is more than a first maximum task number, rejecting to process said received location request by said Location Service server in case said first task number is more than said first maximum task number and processing said received location request by said Location Service server otherwise, whereby, in case of a rejection of the received location request, said Location Service server decides whether to completely or partly reject the received location request and, in case of a partial rejection, accepts a part of the received location request tasks, processes the accepted location request tasks and rejects the other part of the received location request tasks, said first task number is either given by the number of the received location request tasks, in which case, firstly, said first maximum task number is a number specifically set for said Location Service client and, secondly, the number of the accepted location request tasks is equal or less than said first maximum task number, or said first task number is given by the sum of said number of the received location request tasks and the number of location request tasks currently processed by said Location Service server, in which case, firstly, said first maximum task number is a number specific for said Location Service server and, secondly, the number of the accepted location request tasks plus said number of location request tasks currently processed by said Location Service server is equal or less than said first maximum task number, the method further comprising negotiating, in case of a partial rejection of the received location request, with said Location Service client whether to delay the processing of said other part of the received location request tasks or to reject said other part.
Advantageously, in case said first task number is given by said number of the received location requests tasks, said first maximum task number is set according to a priority of said Location Service client.
Advantageously, in case said first task number is given by said sum of said number of the received location request tasks and the number of location request tasks currently processed by said Location Service server, the method further comprises steps of verifying whether a second task number is more than a second maximum task number, said second task number given by said number of the received location request tasks and said second maximum task number given by a number specifically set for said Location Service client, and rejecting to process said received location request by said Location Service server in case said second task number is more than said second maximum task number.
Advantageously, the method further comprises a step of returning, in case of a total rejection of the received location request, a response message indicating that the received location request is rejected to said Location Service client by said Location Service server. Hereby, said response message advantageously comprises an error value indicating the cause of rejection.
Advantageously, in case said first task number is given by said sum of said number of the received location request tasks and the number of location request tasks currently processed by said Location Service server, said first maximum task number is set according to the Location Service server's capacity of processing location request tasks.
To solve the above problem the present invention further provides a system for restricting location request flows in Location Service. The system comprises a Location Service server adapted to receive a location request sent by a Location Service client, said location request comprising location request tasks for more than one target user equipment, verify whether a first task number is more than a first maximum task number, reject to process said received location request in case said first task number is more than said first maximum task number and to process said received location request otherwise, whereby said Location Service server, in case of a rejection of the received location request, is further adapted to decide whether to completely or partly reject the received location request and, in case of a partial rejection, is adapted to accept a part of the received location request tasks, process the accepted location request tasks and reject the other part of the received location request tasks, said first task number is either given by the number of the received location request tasks, in which case, firstly, said first maximum task number is a number specifically set for said Location Service client and, secondly, the number of the accepted location request tasks is equal or less than said first maximum task number, or said first task number is given by the sum of said number of the received location request tasks and the number of location request tasks currently processed by said Location Service server, in which case, firstly, said first maximum task number is a number specific for said Location Service server and, secondly, the number of the accepted location request tasks plus said number of location request tasks currently processed by said Location Service server is equal or less than said first maximum task number, and whereby said Location Service server is further adapted to negotiate, in case of a partial rejection of the received location request, with said Location Service client whether to delay the processing of said other part of the received location request tasks or to reject said other part.

According to the present invention, on the one hand, LCS Server can set different Maximum Location request tasks for different LCS Clients, and restrict Location request number sent by LCS Client; on the other hand, LCS server can control whether to process subsequent Location requests according to self processing capacity, thus protect system performance security of LCS Server in condition of substantive Location requests collision. Meanwhile, the above two schemes can be combined to better restrict flow, which can enhance integral performance security of LCS Server.

### Brief Description of the Drawings

Figure 1 is a schematic diagram illustrating logical structure of LCS network;
Figure 2 is a flowchart illustrating flow restriction of LCS Client in the present invention;
Figure 3 is a flowchart illustrating flow restriction of LCS Server in the present invention;
Figure 4 is a flowchart illustrating combination of flow restriction in LCS Client and that in LCS Server in the present invention.

### Embodiments of the Invention

The present invention will be described in detail hereinafter with reference to the accompanying drawings.

In a first embodiment, LCS Server Restricts Location request task number sent by a certain LCS Client by setting Maximum Location request task corresponding to this LCS Client thereof in LCS Server. Maximum Location request task denotes the maximum task number that LCS Server allows a LCS Client to carry in terms of the transmitted Location request number. More than one target UE identifier is comprised in a Location request, wherein each positioning request identified by each target UE identifier represents a Location request task, maximum task number means the maximum number of target UE identifiers which are carried in this Location request.

LCS Server can perform different restrictions to Location request task quantities sent by different LCS Clients, namely Maximum Location request task can be set according to priority of a LCS Client, wherein larger Maximum Location request task is set for LCS Client with higher priority, and smaller Maximum Location request task is set for LCS Client with lower priority, for instance, LCS Client A is of higher priority than LCS Client B, thus Maximum Location request task of LCS Client A is set as 50, while that of LCS Client B is set as 20.

When receiving Location request sent by a LCS Client, at first LCS Server judges whether current to-be-processed task number of the received location information sent by the LCS Client exceeds Maximum Location request task of this LCS Client, if yes, LCS can directly reject current Location request of the LCS Client, returns failure response message which carries corresponding error cause value to LCS Client; LCS can also directly ignore current Location request sent by the LCS Client, and return no response message to LCS Client. Otherwise, LCS Server will process the current Location request sent by LCS Client.

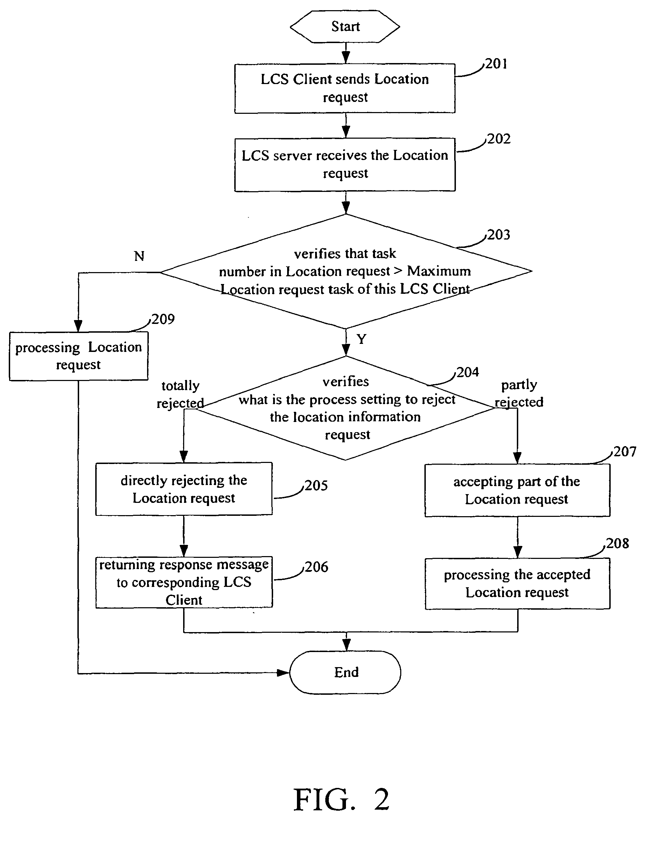

Figure 2 is a flowchart illustrating flow restriction of LCS Client in the present invention, as shown in figure 2, process of LCS Client flow restriction comprises the following steps:
Step 201∼step 203: LCS Client sends Location request to LCS Server, after receiving the Location request, LCS Server judges whether Location request task number of the received location information is more than Maximum Location request task corresponding to this LCS Client, if yes, goes to step 204; otherwise, goes to step 209.
Step 204: LCS Server judges whether to totally or partly reject the request, if totally, step 205 is executed, if partly, step 207 is executed.
Step 205: LCS Server directly rejects the Location request sent by LCS Client.
Step 206: LCS Server returns response message to corresponding LCS Client, wherein the response message carries corresponding error cause value, and then ends current flow restriction process. This step can be omitted, namely LCS Server omits this Location request, returns no response message to corresponding LCS Client. If this step is omitted, after rejecting the Location request in step 205, LCS Server will directly end current flow restriction process. In addition, LCS Server may return response messages to part of the LCS Clients, for example, LCS Server only returns response message to the LCS Client with higher priority, as to that the LCS Client with lower priority, returns no response message, so as to save system resource.
Step 207∼step 208: LCS Server rejects part of the Location request, namely accepts part of the Location request, after performing subsequent process to the accepted Location request, ends current flow restriction process.
Step 209: after performing subsequent process to the Location request, LCS Server ends current flow restriction process.

For instance, LCS Server sets Maximum Location request task of LCS Client A as 40, LCS Client A sends Location request to LCS Server, wherein the Location request carries 50 target UE identifiers, requests LCS Server to position the 50 target UE and return location information of corresponding target UE to LCS Client A. Here, LCS Server detects that number of current Location request sent by LCS Client A is more than Maximum Location request task of LCS Client A, so LCS Server judges whether to totally or partly reject the request, if totally, LCS Server directly rejects the Location request sent by LCS Client, and can return response message to corresponding LCS Client, wherein the response message carries relevant error cause value; if partly, LCS Server accepts 40 target UE identifiers of the Location request, then position the 40 target UE, and provides location information of the corresponding 40 target UE to LCS Client A. LCS Server can randomly accept 40 target UE identifiers of the 50 target UE identifiers in this Location request, or orderly accept the first 40 target UE identifiers of this Location request, or accept 40 target UE identifiers of this Location request according to the setting, like setting priority level in terms of target UE and accepting the 40 target UE identifiers with higher priority levels. As for the rejected 10 target UE identifiers comprised in this Location request, LCS Server negotiates with LCS Client, so as to determine whether to detain the process or cancel the operation in terms of current Location request. If it is determined to detain the process, LCS will delay a period of time before positioning the rejected target UE. If it is determined to cancel the operation, LCS Server will not position the rejected target UE.

In a second embodiment, LCS Server sets total Maximum Location request task according to its task processing capacity thereof, i.e. total task number of Location request that LCS Server is able to process. When LCS Server detects that the number of under-processed Location request task is close to the total Maximum Location request task, LCS Server can reject the total subsequent received Location requests, or partly reject the subsequent received Location requests according to the setting. When LCS Server detects that the number of under-processed Location request task is far smaller than total Maximum Location request task, LCS Server normally process the subsequent received Location requests.

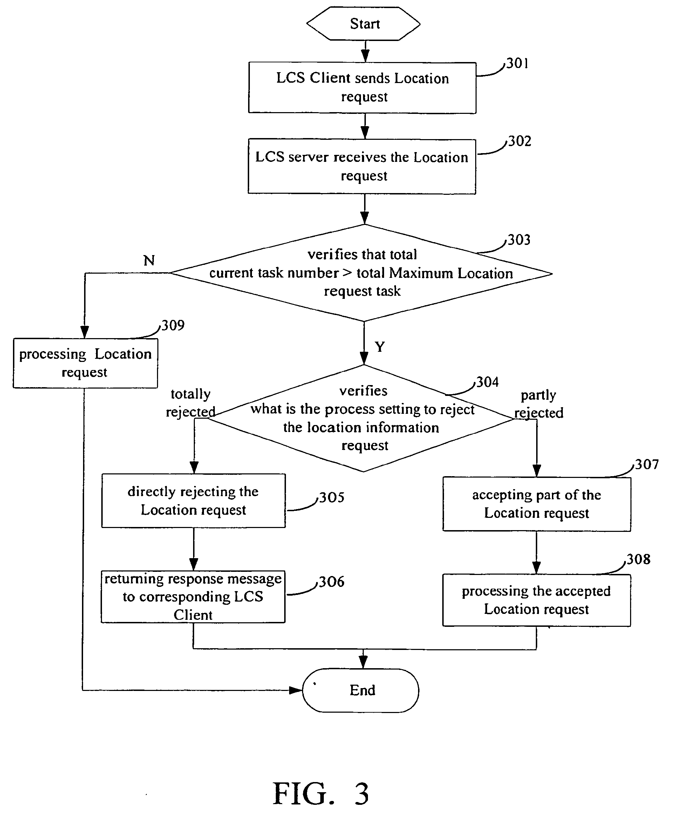

Figure 3 is a flowchart illustrating flow restriction of LCS Server in the present invention, as shown in figure 3, process of LCS Server flow restriction comprises the following steps:
Step 301∼step 302: LCS Client sends Location request to LCS Server, after receiving the Location request, LCS Server judges whether total task number of current Location request is more than total Maximum Location request task, if yes, step 304 is executed; otherwise, step 309 is executed. Total task number of current Location request is composed of to-be-processed Location request task number and under-processed Location request task number.
Step 304∼step 309 are basically the same as step 204∼step 209.

For instance, total Maximum Location request task of LCS Server is 256, and under-processed task number is 240, here LCS receives 20 more different Location requests, and each Location request carries only one target UE identifier. Here, LCS Server detects that total task number of current Location request is more than total Maximum Location request task, so LCS Server judges whether to totally or partly reject the request, if totally, LCS Server directly rejects the 20 Location requests, and can return response message to corresponding LCS Client, wherein the response message carries relevant error cause value; if partly, LCS Server accepts 16 Location requests thereof, then process the 16 Location requests, position the corresponding 16 target UE, and provides location information of the corresponding target UE to corresponding LCS Client. LCS Server can randomly accept 16 Location requests of the 20 Location requests, or orderly accept the first 16 Location requests, or accept 16 Location requests according to the setting, like setting priority level in terms of target UE and accepting the 16 Location requests of target UE with higher priority levels. As for the rejected 4 Location requests, LCS Server negotiates with LCS Client, so as to determine whether to detain the process or cancel the operation in terms of current Location requests. If it is determined to detain the process, LCS will delay a period of time before processing the 4 rejected Location requests. If it is determined to cancel the operation, LCS Server will not process the 4 rejected Location requests.

In order to better restrict Location request flow in location service, flow restriction of LCS Client and that of LCS Server can be combined for better application.

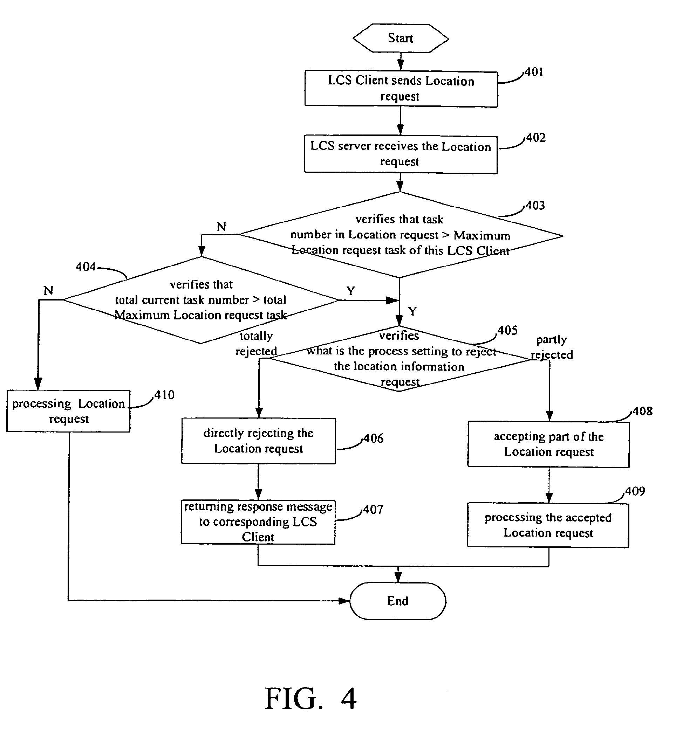

Figure 4 is a flowchart illustrating combination of flow restriction in LCS Client and that in LCS Server in the present invention, as shown in figure 4, the process of combining flow restriction in LCS Client and that in LCS Server comprises the following steps:
Step 401∼step 402: LCS Client sends Location request to LCS Server, and LCS Server receives the Location request sent by LCS Client.
Step 403: after receiving the Location request, LCS Server judges whether Location request task number is more than Maximum Location request task corresponding to this LCS Client, if larger, step 405 is executed; otherwise, step 404 is executed.
Step 404: LCS Server judges whether total task number of current Location request is more than total Maximum Location request task in LCS Server, if larger, step 405 is executed; otherwise, step 410 is executed.

In fact, step 403 and step 404 can be exchanged.
Step 405~step 410 are basically the same as step 204~step 209.

For instance, total Maximum Location request task in LCS Server is 256, Maximum Location request task of LCS Client B is 20. Current under-processed task number in LCS Server is 250, LCS Client B sends Location request to LCS Server, wherein the Location request carries 10 target UE identifiers, and requests LCS Server to position the 10 target UE, and provide location information of the corresponding target UE for LCS Client B. Here, LCS Server detects that number of current Location request task sent by LCS Client B is smaller than Maximum Location request task of LCS Client B, LCS Server further judges whether this Location request can be accepted according to current processing capacity, namely LCS Server can further judges whether to-be-processed task number will exceed total Maximum Location request task in LCS Server if the Location request is accepted, LCS Server detects that total task number of current Location request is more than total Maximum Location request task in LCS Server, as LCS Server is not able to process 10 tasks according to current processing capacity thereof, so LCS Server judges whether to totally or partly reject the requests, if totally, LCS Server directly rejects the 10 Location requests, and can return response message to LCS Client B, wherein the response message carries relevant error cause value; if partly, LCS Server accepts 6 Location requests thereof, then process the 6 Location requests, position the corresponding 6 target UE, and provides location information of the corresponding target UE to LCS Client B. As for the rejected 4 Location requests, LCS Server negotiates with LCS Client B, so as to determine whether to detain the process or cancel the operation in terms of current Location request. If it is determined to detain the process, LCS will delay a period of time before processing the 4 rejected Location requests. If it is determined to cancel the operation, LCS Server will not process the 4 rejected Location requests.

In a word, the above description is just a preferable embodiment, not used to confine the protection scope of the present invention.

## Claims

1. A method for restricting location request flows in Location Service comprising the steps of
receiving (202, 302) at a Location Service server (102) a location request sent by a Location Service client (101), said location request comprising location request tasks for more than one target user equipment (103),
verifying (203, 303) whether a first task number is more than a first maximum task number,
rejecting to process said received location request by said Location Service server (102) in case said first task number is more than said first maximum task number and
processing (209, 309) said received location request by said Location Service server (102) otherwise,
whereby,
in case of a rejection of the received location request, said Location Service server (102) decides (204, 304) whether to completely or partly reject the received location request and, in case of a partial rejection, accepts (207, 307) a part of the received location request tasks, processes (208, 308) the accepted location request tasks and rejects the other part of the received location request tasks,
said first task number is either given by
the number of the received location request tasks,
in which case, firstly, said first maximum task number is a number specifically set for said Location Service client (101) and, secondly, the number of the accepted location request tasks is equal or less than said first maximum task number,
or said first task number is given by
the sum of said number of the received location request tasks and the number of location request tasks currently processed by said Location Service server (102),
in which case, firstly, said first maximum task number is a number specific for said Location Service server (102) and, secondly, the number of the accepted location request tasks plus said number of location request tasks currently processed by said Location Service server (102) is equal or less than said first maximum task number,
the method further comprising
negotiating, in case of a partial rejection of the received location request, with said Location Service client (101) whether to delay the processing of said other part of the received location request tasks or to reject said other part.

2. A method for restricting location request flows in Location Service according to claim 1 wherein
said first task number is given by said number of the received location requests tasks and said first maximum task number is set according to a priority of said Location Service client (101).

3. A method for restricting location request flows in location Service according to claim 1 wherein
said first task number is given by said sum of said number of the received location request tasks and the number of location request tasks currently processed by said Location Service server (102),
the method further comprising steps of
verifying whether a second task number is more than a second maximum task number, said second task number given by said number of the received location request tasks and said second maximum task number given by a number specifically set for said Location Service client (101), and
rejecting to process said received location request by said Location Service server (102) in case said second task number is more than said second maximum task number.

4. A method for restricting location request flows in Location Service according to claim 1 comprising a step of
returning, in case of a total rejection of the received location request, a response message indicating that the received location request is rejected to said Location Service client (101) by said Location Service server (102).

5. A method for restricting location request flows in Location Service according to claim 4 wherein
said response message comprises an error value indicating the cause of rejection.

6. A method for restricting location request flows in Location Service according to claim 1 or 3 wherein
said first task number is given by said sum of said number of the received location request tasks and the number of location request tasks currently processed by said Location Service server (102) and said first maximum task number is set according to the Location Service server's capacity of processing location request tasks.

7. A system for restricting location request flows in Location Service comprising a Location Service server (102) adapted to
receive a location request sent by a Location Service client (101), said location request comprising location request tasks for more than one target user equipment (103),
verify whether a first task number is more than a first maximum task number,
reject to process said received location request in case said first task number is more than said first maximum task number and to
process said received location request otherwise,
whereby
said Location Service server (102), in case of a rejection of the received location request, is further adapted to decide whether to completely or partly reject the received location request and, in case of a partial rejection, is adapted to accept a part of the received location request tasks, process the accepted location request tasks and reject the other part of the received location request tasks,
said first task number is either given by
the number of the received location request tasks,
in which case, firstly, said first maximum task number is a number specifically set for said Location Service client (101) and, secondly, the number of the accepted location request tasks is equal or less than said first maximum task number,
or said first task number is given by
the sum of said number of the received location request tasks and the number of location request tasks currently processed by said Location Service server (102),
in which case, firstly, said first maximum task number is a number specific for said Location Service server (102) and, secondly, the number of the accepted location request tasks plus said number of location request tasks currently processed by said Location Service server (102) is equal or less than said first maximum task number,
and whereby
said Location Service server (102) is further adapted to negotiate, in case of a partial rejection of the received location request, with said Location Service client (101) whether to delay the processing of said other part of the received location request tasks or to reject said other part.

## Patentansprüche

1. Verfahren zur Beschränkung von Ortsbestimmungsanfrageströmen in einem Ortsbestimmungsdienst umfassend die Schritte Empfangen (202, 302) einer Ortsbestimmungsanfrage in einem Ortsbestimmungsdienst Server (102), die von einem Ortsbestimmungsdienst Client (101) gesendet wurde, wobei die Ortsbestimmungsanfrage Ortsbestimmungsanfrage-Aufgaben für mehr als eine Zielnutzerausstattung (103) umfasst;
Verifizieren (203, 303), ob eine erste Aufgabenanzahl über eine erste maximale Aufgabenanzahl hinausgeht,
Verweigern durch den Ortsbestimmungsdienst Server (102), die empfangene Ortsbestimmungsanfrage zu verarbeiten, in dem Fall, dass die erste Aufgabenanzahl größer ist als die erste maximale Aufgabenanzahl, und
andernfalls Verarbeiten (209, 309) durch den Ortsbestimmungsdienst Server (102) der empfangenen Ortsbestimmungsanfrage,
wobei,
im Fall einer Verweigerung der empfangenen Ortsbestimmungsanfrage der Ortsbestimmungsdienst Server (102) entscheidet (204, 304), ob die empfangene Ortsbestimmungsanfrage vollständig oder teilweise abgelehnt wird, und, im Fall einer teilweisen Ablehnung, er (207, 307) einen Teil der empfangenen Ortsbestimmungsanfragen-Aufgaben annimmt, (208, 308) die angenommenen Ortsbestimmungsanfrage-Aufgaben verarbeitet und die anderen Teile der empfangenen Ortsbestimmungsanfrage-Aufgaben zurückweist,
die erste Aufgabenanzahl entweder bestimmt ist durch die Anzahl der empfangenen Ortsbestimmungsanfrage-Aufgaben,
wobei in dem Fall zunächst die erste maximale Aufgabenanzahl eine Anzahl ist, die eigens für den Ortsbestimmungsdienst Client (101) festgelegt ist, und, zweitens die Anzahl der angenommenen Ortsbestimmungsanfrage-Aufgaben gleich oder kleiner als die erste Aufgabenanzahl ist,
oder wobei die erste Aufgabenanzahl angegeben wird durch die Summe aus der Anzahl der empfangenen Ortsbestimmungsanfrage-Aufgaben und der Anzahl der Ortsbestimmungsanfrage-Aufgaben, die aktuell durch den Ortsbestimmungsdienst Server (102) verarbeitet werden,
wobei in dem Fall erstens die erste maximale Aufgabenanzahl eine Anzahl eigens für den Ortsbestimmungsdienst Server (102) ist, und zweitens, die Anzahl der angenommenen Ortsbestimmungsanfrage-Aufgaben zuzüglich der Anzahl der Ortsbestimmungsanfrage-Aufgaben, die aktuell durch den Ortsbestimmungsdienst Server (102) verarbeitet werden, gleich oder kleiner als die erste maximale Aufgabenanzahl ist,
wobei das Verfahren ferner umfasst Verhandeln/Vereinbaren, im Fall einer teilweisen Ablehnung der empfangenen Ortsbestimmungsanfrage mit dem Ortsbestimmungsdienst Client (101), ob die Verarbeitung des anderen Teils der empfangenen Ortsbestimmungsanfrage-Aufgaben aufgeschoben werden soll, oder ob der andere Teil abgelehnt werden soll.

2. Verfahren zur Beschränkung von Ortsbestimmungsanfrageströmen in einem Ortsbestimmungsdienst nach Anspruch 1, wobei die erste Aufgabenanzahl bestimmt ist durch die Anzahl der empfangenen Ortsbestimmungsanfrage-Aufgaben und die erste maximale Aufgabenanzahl entsprechend einer Priorität des Ortsbestimmungsdienst Client (101) eingestellt ist.

3. Verfahren zur Beschränkung von Ortsbestimmungsanfrageströmen in einem Ortsbestimmungsdienst nach Anspruch 1, wobei die erste Aufgabenanzahl bestimmt ist durch die Summe der Anzahl der empfangenen Ortsbestimmungsanfrage-Aufgaben und die Anzahl der Ortsbestimmungsanfrage-Aufgaben, die aktuell durch den Ortsbestimmungsdienst Server (102) verarbeitet werden, wobei das Verfahren ferner die Schritte umfasst Verifizieren, ob eine zweite Aufgabenanzahl größer ist als eine zweite maximale Aufgabenanzahl, wobei die zweite Aufgabenanzahl durch die Anzahl der empfangenen Ortsbestimmungsanfrage-Aufgaben bestimmt ist und die zweite maximale Aufgabenanzahl durch die Anzahl bestimmt ist, die eigens für den Ortsbestimmungsdienst Client (101) eingestellt ist, und Ablehnen durch den Ortsbestimmungsdienst Server (102), dass die empfangene Ortsbestimmungsanfrage verarbeitet wird, in dem Fall, dass die zweite Aufgabenanzahl größer ist als die zweite maximale Aufgabenanzahl.

4. Verfahren zur Beschränkung von Ortsbestimmungsanfrageströmen in einem Ortsbestimmungsdienst nach Anspruch 1, umfassend einen Schritt des Zurücksendens einer Antwortnachricht an den Ortsbestimmungsdienst Client (101) durch den Ortsbestimmungsdienst Server (102), die anzeigt, dass die empfangene Ortsbestimmungsanfrage abgelehnt wurde, im Fall einer totalen Ablehnung der empfangenen Ortsbestimmungsanfrage.

5. Verfahren zur Beschränkung von Ortsbestimmungsanfrageströmen in einem Ortsbestimmungsdienst nach Anspruch 4, wobei die Antwortnachricht einen Fehlerwert umfasst, der den Grund der Ablehnung angibt.

6. Verfahren zur Beschränkung von Ortsbestimmungsanfrageströmen in einem Ortsbestimmungsdienst nach Anspruch 1 oder 3, wobei die erste Aufgabenanzahl durch die Summe der Anzahl der empfangenen Ortsbestimmungsanfrage-Aufgaben und die Anzahl der Ortsbestimmungsanfrage-Aufgaben bestimmt ist, die aktuell durch den Ortsbestimmungsdienst Server (102) verarbeitet werden, und die erste maximale Aufgabenanzahl entsprechend der Kapazität des Ortsbestimmungsdienst Servers eingestellt ist, Ortsbestimmungsanfrage-Aufgaben zu bearbeiten.

7. System zur Beschränkung von Ortsbestimmungsanfrageströmen in einem Ortsbestimmungsdienst umfassend einen Ortsbestimmungsdienst Server (102), der geeignet ist, um
eine von einem Ortsbestimmungsdienst Client (101) gesendete Ortsbestimmungsanfrage zu empfangen, wobei die Ortsbestimmungsanfrage Ortsbestimmungsanfrage-Aufgaben für mehr als eine Zielnutzerausstattung (103) umfasst,
Verifizieren, ob eine erste Aufgabenanzahl größer ist als eine erste maximale Aufgabenanzahl,
abzulehnen, die empfangene Ortsbestimmungsanfrage zu verarbeiten, in dem Fall, dass die erste Aufgabenanzahl über die erste maximale Aufgabenanzahl hinausgeht und, um
andernfalls die empfangene Ortsbestimmungsanfrage zu verarbeiten,
wobei
in dem Fall einer Ablehnung der empfangenen Ortsbestimmungsanfrage der Ortsbestimmungsdienst Server (102) ferner geeignet ist, zu entscheiden, ob die empfangene Ortsbestimmungsanfrage vollständig oder teilweise abgelehnt wird, und in dem Fall einer teilweisen Ablehnung geeignet ist, einen Teil der empfangenen Ortsbestimmungsanfrage-Aufgaben anzunehmen, die angenommenen Ortsbestimmungsanfrage-Aufgaben zu verarbeiten und den andren Teil der empfangenen
Ortsbestimmungsanfrage-Aufgaben abzulehnen,
wobei die erste Aufgabenanzahl entweder bestimmt ist
durch die Anzahl der empfangenen Ortsbestimmungsanfrage-Aufgaben,
wobei in dem Fall erstens die erste maximale Aufgabenanzahl eines eigens für den Ortsbestimmungsdienst Client (101) eingestellte Anzahl ist und, zweitens die Anzahl der angenommenen Ortsbestimmungsanfrage-Aufgaben gleich oder kleiner als die erste maximale Aufgabenanzahl ist, oder wobei die erste Aufgabenanzahl bestimmt ist durch
die Summe der Anzahl der empfangenen Ortsbestimmungsanfrage-Aufgaben und die Anzahl der Ortsbestimmungsanfrage-Aufgaben, die aktuell durch den Ortsbestimmungsdienst Server (102) verarbeitet werden,
wobei in dem Fall erstens die erste maximale Aufgabenanzahl eine für den Ortsbestimmungsdienst Server (102) bestimmte Anzahl ist und, zweitens die Anzahl der angenommenen Ortsbestimmungsanfrage-Aufgaben zuzüglich der Anzahl der Ortsbestimmungsanfrage-Aufgaben, die aktuell durch den Ortsbestimmungsdienst Server (102) verarbeitet werden, gleich oder kleiner der ersten maximalen Aufgabenanzahl ist,
und wobei
der Ortsbestimmungsdienst Server (102) ferner geeignet ist, in dem Fall einer teilweisen Ablehnung der empfangenen Ortsbestimmungsanfrage mit dem Ortsbestimmungsdienst Client (101) zu verhandeln/vereinbaren, ob die Verarbeitung des anderen Teils der empfangenen Ortsbestimmungsanfrage-Aufgaben aufgeschoben wird oder ob der andere Teil abgelehnt wird.

## Revendications

1. Procédé pour limiter des flux de demandes de position dans un Service de Position comprenant les étapes de
recevoir (202, 302) à un serveur de Service de Position (102) une demande de position transmise par un client de Service de Position (101), ladite demande de position comprenant des tâches de demande de position pour plus d'un équipement utilisateur cible (103),
vérifier (203, 303) si un premier nombre de tâches est supérieur à un premier nombre de tâches maximum,
rejeter pour traiter ladite demande de position reçue par ledit serveur de Service de Position (102) dans le cas
où ledit premier nombre de tâches est supérieur audit premier nombre de tâches maximum et
traiter (209, 309) ladite demande de position reçue par ledit serveur de Service de Position (102) autrement,
par quoi, dans le cas d'un rejet de la demande de position reçue, ledit serveur de Service de Position (102) décide (204, 304) s'il faut rejeter complètement ou partiellement la demande de position reçue et, en cas d'un rejet partiel, accepte (207, 307) une partie des tâches de demande de position reçues, traite (208, 308) les tâches de demande de position acceptées et rejette l'autre partie des tâches de demande de position reçues,
ledit premier nombre de tâches est fourni soit par
le nombre des tâches de demande de position reçues,
auquel cas, tout d'abord, ledit premier nombre de tâches maximum est un nombre réglé spécifiquement pour ledit client de Service de Position (101) et, deuxièmement,
le nombre des tâches de demande de position acceptées est égal ou inférieur audit premier nombre de tâches maximum,
ou bien ledit premier nombre de tâches est fourni par
la somme dudit nombre de tâches de demande de position reçues et du nombre de tâches de demande de position actuellement traitées par ledit serveur de Service de Position (102),
auquel cas, tout d'abord, ledit premier nombre de tâches maximum est un nombre spécifique audit serveur de Service de Position (102) et, deuxièmement, le nombre des tâches de demande de position acceptées plus ledit nombre de tâches de demande de position actuellement traitées par ledit serveur de Service de Position (102) est égal ou inférieur audit premier nombre de tâches maximum,
le procédé comprenant en outre
négocier, en cas de rejet partiel de la demande de position reçue, avec ledit client de Service de Position (101) s'il faut retarder le traitement de ladite autre partie des tâches de demande de position reçues ou bien rejeter ladite autre partie.

2. Procédé pour limiter des flux de demandes de position dans un Service de Position selon la revendication 1, où
ledit premier nombre de tâches est fourni par ledit nombre des tâches de demande de position reçues, et ledit premier nombre de tâches maximum est réglé en accord avec une priorité dudit client de Service de Position (101).

3. Procédé pour limiter des flux de demandes de position dans un Service de Position selon la revendication 1, où
ledit premier nombre de tâches est fourni par ladite somme dudit nombre de tâches de demande de position reçues et du nombre de tâches de demande de position actuellement traitées par ledit serveur de Service de Position (102),
le procédé comprenant en outre les étapes de
vérifier si un deuxième nombre de tâches est supérieur à un deuxième nombre de tâches maximum, ledit deuxième nombre de tâches fournies par ledit nombre des tâches de demande de position reçues et ledit deuxième nombre de tâches maximum fournies par un nombre réglé spécifiquement pour ledit client de Service de Position (101), et
rejeter pour traiter ladite demande de position reçue par ledit serveur de Service de Position (102) dans le cas
où ledit deuxième nombre de tâches est supérieur audit deuxième nombre de tâches maximum.

4. Procédé pour limiter des flux de demandes de position dans un Service de Position selon la revendication 1, comprenant une étape de
retourner, en cas de rejet total de la demande de position reçue, un message de réponse indiquant que la demande de position reçue est rejetée audit client de Service de Position (102) par ledit serveur de Service de Position (102).

5. Procédé pour limiter des flux de demandes de position dans un Service de Position selon la revendication 4, où
ledit message de réponse comprend une valeur d'erreur indiquant la cause du rejet.

6. Procédé pour limiter des flux de demandes de position dans un Service de Position selon la revendication 1 ou 3, où
ledit premier nombre de tâches est fourni par ladite somme dudit nombre de tâches de demande de position reçues et du nombre de tâches de demande de position actuellement traitées par ledit serveur de Service de Position (102), et ledit premier nombre de tâches maximum est réglé en accord avec la capacité du serveur de Service de Position pour traiter les tâches de demande de position.

7. Système pour limiter des flux de demandes de position dans un Service de Position comprenant un serveur de Service de Position (102) apte à
recevoir une demande de position transmise par un client de Service de Position (101), ladite demande de position comprenant des tâches de demande de position pour plus d'un équipement utilisateur cible (103),
vérifier si un premier nombre de tâches est supérieur à un premier nombre de tâches maximum,
rejeter pour traiter ladite demande de position reçue dans le cas où ledit premier nombre de tâches est supérieur audit premier nombre de tâches maximum et pour
traiter ladite demande de position reçue autrement,
par quoi
ledit serveur de Service de Position (102), en cas de rejet de la demande de position reçue, est apte en outre à décider s'il faut rejeter complètement ou partiellement la demande de position reçue et, en cas de rejet partiel, est apte à accepter une partie des tâches de demande de position reçues, traiter les tâches de demande de position acceptées et rejeter l'autre partie des tâches de demande de position reçues,
ledit premier nombre de tâches est fourni soit par
le nombre de tâches de demande de position reçues,
auquel cas, tout d'abord, ledit premier nombre de tâches maximum est un nombre réglé spécifiquement pour ledit client (101) du Service de Position et, deuxièmement, le nombre de tâches de demande de position acceptées est égal ou inférieur audit premier nombre de tâches maximum,
ou ledit premier nombre de tâches est fourni par
la somme dudit nombre de tâches de demande de position reçues et du nombre de tâches de demande de position actuellement traitées par ledit serveur (102) du Service de Position,
auquel cas, tout d'abord, ledit premier nombre de tâches maximum est un nombre spécifique audit serveur (102) de Service de Position et, deuxièmement, le nombre de tâches de demande de position acceptées plus ledit nombre de tâches de demande de position actuellement traitées par ledit serveur (102) du Service de Position est égal ou inférieur audit premier nombre de tâches maximum,
et par quoi
ledit serveur (102) du Service de Position est en outre apte à négocier, en cas d'un rejet partiel de la demande de position reçue, avec ledit client (101) du Service de Position s'il faut retarder le traitement de ladite autre partie des tâches de demande de position reçues ou rejeter ladite autre partie.
